# EUROPEAN PATENT APPLICATION

(11) **EP 0 863 263 A1**
(43) Date of publication of application: **09.09.1998**
(21) Application number: 97930529.9
(22) Date of filing: 11.07.1997
(51) Int. Cl.: E02D 29/12

(54) **MODULAR DISMOUNTABLE BOX**

(30) Priority: 12.07.1996 ES 9601909 U; 02.01.1997 ES 9700004
(71) Applicant: Diaz Berango, Gorka, 31300 Navarra (ES)
(72) Inventor: Diaz Berango, Gorka, 31300 Navarra (ES)
(74) Representative: Del Valle Valiente, Juan Carlos
(86) International application number: ES9700174
(87) International publication number: WO9802617

(57) **Abstract**

Modular dismountable box comprised of a plurality of subdivision panels (33), provided with closing lids (34) and grids (39), and having modules (31) with a slit (36) and a longitudinal rib (38), the slit (36) being arranged in the right portion and the rib (38) in the left portion of the modules (31) or vice-versa, and having a longitudinal slit (37) situated in the lateral faces, intended to receive the longtitudinal protuberance (40) of the partition walls (33), with the possibility of adopting optionally a circular base configuration, in which case the modules (31') and similar elements have a curved configuration.

## Description

### OBJECT OF THE INVENTION

This specification makes reference to a modular dismountable box, whose finallity is to be configurated as a conventional box, able to be configurated in a plurality of applications within the specific ground of boxes, being the box formed by fixing to the ground a body where the profiles that comprise the retention nexus of the lateral panels are fixed, being possible to them to have different dimensions (wideness and long), and being comprised the panels of fixing ties on the lateral profiles which avoid their separation and, at the same time, comprised of a lid, placed in the upper area to close properly the box.

It is also object of the invention the possibility of creating the box by fixing to the ground a body where some panels are fixed in order to let us have an infinity of shapes combining the panels and also make partitions inside the box.

### GROUND OF THE INVENTION

This invention is applicable within the industry dedicated to the manufacture of boxes, being possible to be used in a conventional way, within the building industry, runs of wirings industry, telecommunications, etc.

### BACKGROUND OF THE INVENTION

The applicant has notice of a plurality of models, with different configurations, materials and applications, destinated to be used as boxes, to an specific application or to different industrial applications, depending on the multiple characteristics.

The applicant has not notice of a dismountable box, which, even when it is used as a box, has the possibility of being dismounted, causing a lot of important advantages, among which is the multiple applications, decreasing the volume in the transport and with absolute guaranties of conventional application.

### DESCRIPTION OF THE INVENTION

The modular dismountable box, proposed by this invention constitutes itself a clear newness within its application field since, thanks to its own characteristics configurated as a dismountable box, lets an easy assembly and definitive instalation in relation to the conventional boxes, configurated as one-piece bodies, made of different materals, characteristics which make difficult its sitting due to the plurality of services instalated and lying under the ground.

Specifically the modular dismountable box, object of this invention is constituted from a body that adopts a quadrangular base configuration and has internally a sensitive concavity, from whose ends emerge quadrangular ribs, being the upper area of their lateral sides composed of a slight longitudinal rib.

In the quadrangular emerging ribs placed in the area next to its comers, once the base has been incorporated, other bodies, also of quadrangular base configuration, are fixed, and act as profiles to the installation of the lateral walls, from whose fixing the box is configurated.

The profiles or quadrangular bodies which act as the structure of the box, have in two of their four faces, specifically in those confronted to the area that constitutes the walls, a longitudinal groove which adopts an arrow configuration in the central area.

Once the supporting elements are fixed, the lateral walls which are made of plastic materials, like the base, will be placed, having in their lateral branches longitudinal ribs destinated to be introduced in a descending and vertical way into the grooves located in the bodies that constitute the structure of the box.

The inferior branch of the walls has a longitudinal slit to be adapted to the longitudinal ribs placed in the upper area of the base.

The upper branch of the walls has a longitudinal rib destinated to let the lid, which has longitudinal slits in its inferior side placed armonically with the upper ribs described in the walls, be adapted to them.

The above-referred pieces, consituent of the structure, have in their inner side a quadrangular base hole, intended to receive the emerging ribs of the base, and in the opposite side quadrangular base ribs destinated to lock the lid when one this is placed in its surface.

It must be mentioned that the longitudinal ribs located in the bigger branches of the pieces constituent of the walls, have a central-cut which gives the ribs flexibility when they are incorporated to the slit of the pieces that constitute the structure, placed longitudinally in two of the four faces of it, specifically in those ones opposite to the areas where the walls are placed.

To synthesize, the modular dismountable box, due to its specific characteristics, is configurated as a body which let its use as a conventional box, being adapted to the place where it has to be located and at the same time, makes possible to implement its inner part with marginal configuration since it has in the internal part of the walls longitudinal slits, where complementary walls can be adapted as implements of the box.

It is also object of the invention a box, which is constituted by a body of quadrangular base configuration, which act as the base of the box, where the modules are placed, these ones, being properly combined and fixed to each other make possible the creation of the box from any shape.

The modules arc formed from a V.body with a base configuration next to a trapezoid, where the height is proportionally bigger than the length and which has the external faces even and continuous but being internally configurated from a frame of cells, creating a honeycomb, with the particularity that the cells are triangular.

The bigger lateral sides of the modules are even and continuous, while one of the smaller lateral sides has a longitudinal rib with the same base configuration; being both of them destinated to fix the modules to each other, making this join when sliding the longitudinal rib of one block inside the longitudinal slit of the other, following a descending, vertical movement.

The modules are agrupated in two types, depending on whether they have the slit in the right and the rib in the left or, on the contrary, have a simetrical shape, this is so since, to make straight walls it is necessary to use alternatively both types, while to make the corners, two modules of the same kind are required.

The modules have in their bigger lateral sides some slits with dovetail section, destinated to receive partition panels to divide the volume created by the assembly of the already mentioned modules, having the partition panel a parallepiped configuration, and also having in two of their confronted smaller sides arrow or dovetail ribs, which fit perfectly in the slits of the modules that form the walls of the box, subdividing it according to the necessities.

Some modules have a circular hole which communicate their bigger internal side, destinated to join the box to the rest of the pipe network of which it is point of join or entrance.

### DESCRIPTION OF THE DRAWINGS

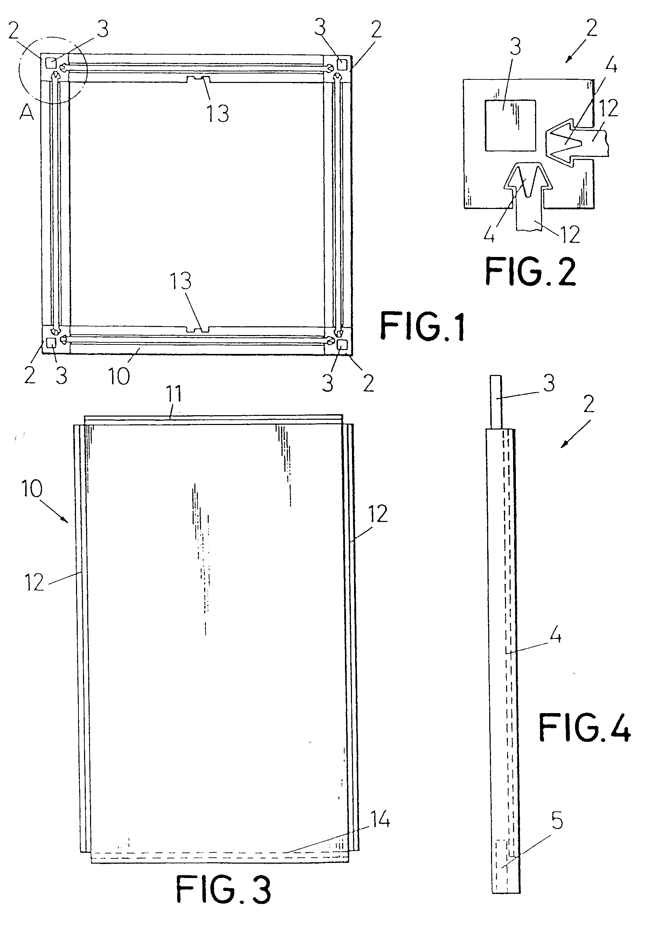

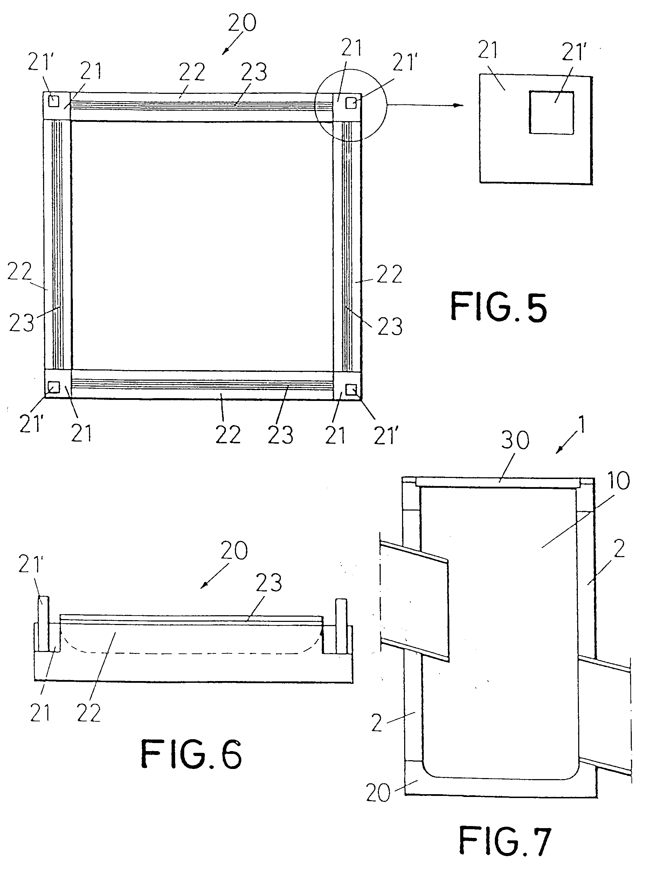

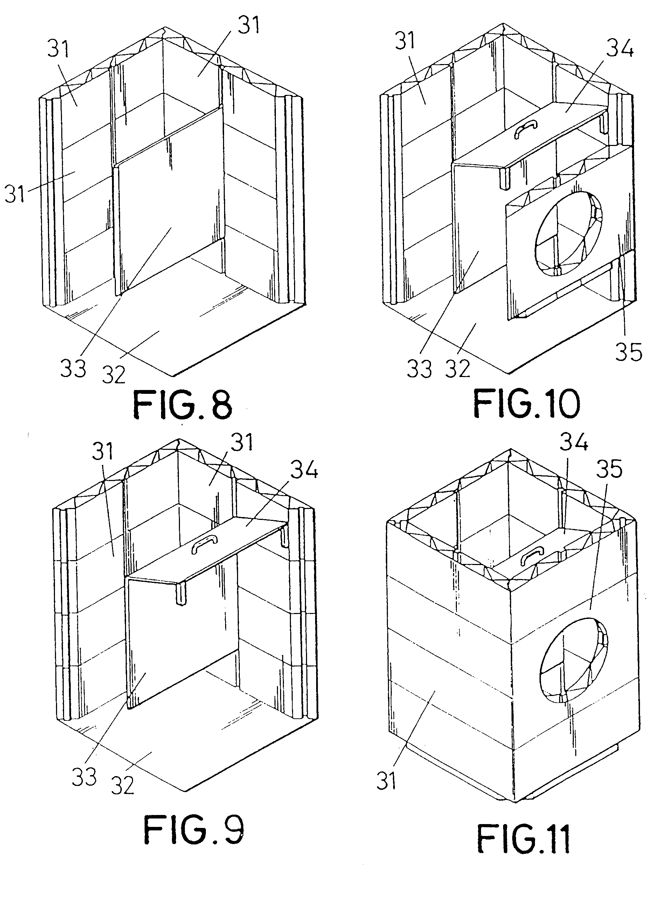

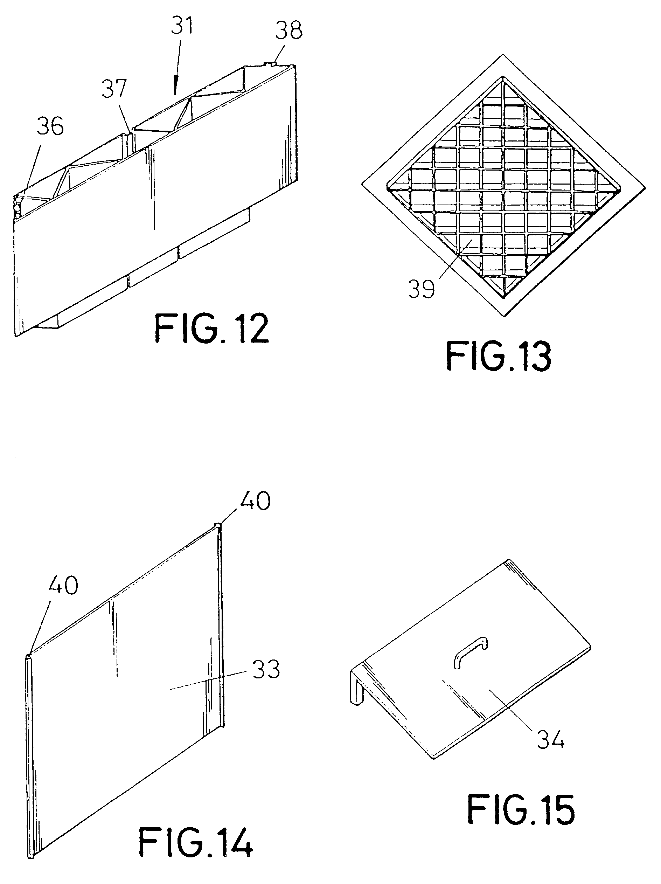

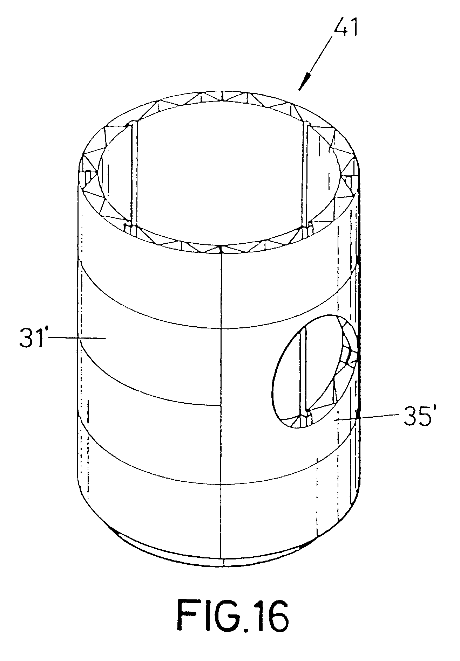

To complement this specification and in order to make easier the comprenhension of the invention's characteristics, have been added to this specification, as a part of it, five pages of plans, where with an ilustrative and non limitative character has been represented:
Figure number 1.- Shows the plan perspective of the fixing ties of the walls, with the walls incorporated, concerning the modular dismountable box object of the invention.
Figure number 2.- Shows a detail of the object represented in figure 1.
Figure number 3.- Shows a lateral elevation view of one of the walls incorporated in the object represented in figure 1.
Figure number 4.- Shows a lateral elevation view of the object represented in the figure 3.
Figure number 5.- Shows a plan view of the piece that constitute the base, from which it has been extrapolated a detail correspondant to one of the corners where the element constituent of the structure is fixed.
Figure number 6.- Shows a lateral elevation view of the object represented in figure number 5.
Figure number 7.- Corresponds to a lateral elevation view, properly sectioned, of the box configurated according to the pieces represented in the preceding figures, incorporating the lid in the upper face.
Figure number 8.- Shows a modular dismountable box in a second fulfillment, being represented in this figure two walls, the base and an internal wall.
Figure number 9.- Shows the box of the figure number 8, where it has been added a lid in one of the cells internally parted.
Figure number 10.- Shows the box of figure number 9 in an evolution stage, it begins with a lateral wall with a module perforated in order to provide the communication of the box wih the surface.
Figure number 11.- Shows the box finished.
Figure number 12.- Shows a standar module.
Figure number 13.- Shows a lid configurated as a grid
Figure number 14.- Shows a panel of internal partition.
Figure number 15.- Shows a lid.
Figure number 16.- Finally shows a third fulfillment of the modular dismountable box, with circular base configuration.

### PREFERABLE FULFILLMENT OF THE INVENTION

From figures numbers 1, 2, 3, 4, 5, 6 and 7 can be observed how the modular dismountable box (1) is composed of bodies slightly expanded (2), of quadrangular base, which have longitudinal grooves (4) with arrow or dovetail internal configuration, being these grooves (4) placed in two of their four sides, specifically in two adjacent sides, intended these longitudinal grooves to receive, by sliding in vertical and descending direction, the longitudinal ribs (12) emerging from the lateral branches of the pieces that constitute the walls (10).

The pieces (2) constituent of the supporting ties which act as structure, have in the upper zone an emerging rib (3) of quadrangular base, and in the opposite point, or base, a perforation (5) destinated to receive the protuberances (21') located in the comers (21) of a piece (20) that acts as the dismountable box base, created by means of the proper join of all the elements that constitute it.

The pieces constituent of the box can be made of a plastic material, and optionally the pieces constituent of the structures (2) or edge, can be made of other inflexible material, like metal.

The piece (20) constituent of the base, which has the protuberances (21') in its comers (21), where it is incorporated by sliding the structures (2), have in the lateral sides and surrounding almost perimetrically the box, with exception of the corners (21) some ribs (23) placed in their lateral sides (22) and being these ribs (23) destinated to be set into the longitudinal seat (14) placed in the piece (10) which acts as wall, once they have been slided and fixed due to its protuberance in the way of an arrow (12) or dovetail, which is introduced into the grooves (4) placed in the piece (2).

In the upper face, the piece number (10) has a longitudinal rib (11) intended to let its assembly in similar grooves which are in a piece (30) that acts as a lid, provided with quadrangular perforations in the corners, where the protuberances (3) of the pieces (2) are introduced.

The walls have in their inner part central grooves (13) placed in their bigger sides, destinated to fix complementary walls to divide the box (1), once this one has been configurated.

In the second fulfillment, and following figures number 8, 9, 10, 11, 12, 13, 14 and 15, it can be seen how the modular dismountable box is composed of a base (32) over which the modules (31) are mounted and to communicate it with the surface there are some entrance/exit (35) modules, as well as lids (34) or grids (39) for closing he subdivisions of the modular dismountable box, created by the walls (33).

The modules (31) have in one of their lateral sides some longitudinal slits with dovetail (36) shape, while in the opposite side have some ribs (38) of the same shape, destinated to join the modules to each other.

There are modules (31) which have the slit (36) in the right side and the rib (38) in the left, or simetrically, in order to be able to create walls composed of more than one module in its long, and corners.

The modules (31) also have some longitudinal slits with arrow-shape (37) in the middle of the bigger sides, destinated to receive the ribs (40) of the subdivision panels (33).

In a third fulfillment, it can be seen from figure number 16 a modular dismountable box of circular base (41), where the curved modules (31') substitute the flat modules (31) and where, the entrance-exit module (35') also adopts the trapezoid base configuration with curved sides, being this fulfillment essentially the same as the second one, and being provided with some sistems to make the internal partitions and to close or join the different zones.

## Claims

1. Modular dismountable box, destinated to be used mainly to collect sanitary waters, with the possibility of being applied in a plurality of marginal services, and being provided with all the pieces of an inflexible plastic material and optionally, some of them constituent of the structural bodies, made of metal, distinguished because it is constituted from a base body (20), which presents a quadrangular or rectangular base configuration, having in the internal area a concave configuration and in its lateral sides (22) a longitudinal rib, in the area that forms its corners a flat configuration of quadrangular base, which forms a stepping in the zone where the walls (22) are joined, including, sligtly out of line, in the middle of the corners (21) an emerging rib (21') of quadrangular base.

2. Modular dismountable box, according to the first claim, distinguised because in the emerging rib (21') of quadrangular base, placed sligtly out of line in the corners (21) of the piece (20) there are introduced and fixed in a descending and vertical movement pieces (2) in the number of four, constituent of the general structure of the box (1), and having the pieces (2) quadrangular base configuration, and in the lower part a perforation (5), where the protuberance (21') is included, while, in the opposite side, the pieces (2) have a protuberance (3) of quadrangular base, being sligtly out of line, having in two of its four sides the piece (2), specifically in two adjacent sides with a longitudinal groove (4) which internally adopt an arrow or dovetail configuration (4).

3. Modular dismountable box, according to the preceding claims, distinguished because in the grooves (4) located in the adjacent faces of the piece (2), there are introduced in a vertical, descending way, longitudinal ribs (12) emerging from the lateral faces of a piece (10) of quadrangular or rectangular base, which has in its upper branch a longitudinal protuberance (11), while in the inferior branch has a longitudinal slit (14) where the longitudinal rib (23) is internally fitted, emerging from the upper face of the lateral branches (22) of the piece (20).

4. Modular dismountable box, according to the precedent claims, distinguished because, optionally the pieces (10) have in one of their two bigger sides, a longitudinal slit (13) which divides in two identical or different areas one of its bigger sides, where, by sliding, it is adapted in two confronted slits, a complementary wall which subdivides the box (1) in two compartimented areas.

5. Modular dismountable box, according to the precedent claims, distinguished because in the upper side of the quadrangular or rectangular configuration, created from the joining of the pieces (10) to the pieces (2) and these ones to the piece (20), it is incorporated a lid (30) provided with stepings in its corners, with a vertical perforation where the protuberances (3) of the pieces (2) are introduced, and longitudinal grooves in the sides coincident with the longitudinal ribs (11) which are fitted in its inner part, comming from the upper face of the piece (10).

6. Modular dismountable box, distinguished because in a second fulfillment, it has a modular and dismountable structure, made of modules (31) which are placed on a base (32) and which have entrance-exit modules (35) to communicate the box with the surface, being possible to subdivide them by means of subdivision panels (33) and having closing lids (34) or grids (39) to get the subdivisions of the perfectionated modular dismountable box.

7. Modular dismountable box, according to claim 6, distinguished because the modules (31) have a longitudinal slit (36) and rib (38) in two of its smaller confronted sides, destinated to guarantee the join of the modules (31).

8. Modular dismountable box, according to claims 6 and 7, distinguished because some of the modules (31) have the slit (36) in the right portion and the rib (38) in the left and another modules (31) have a simetrical configuration with the possibility of making walls made of more than one module (3) of long or corners.

9. Modular dismountable box, according to claims 6, 7 and 8, distinguished because the modules (31) have a slit longitudinally placed in the lateral faces, intended to receive the longitudinal protuberance (40) of the partition walls (33).

10. Modular dismountable box, according to claims 6, 7, 8 and 9, distinguished because in a third fulfillment, the box adopts a circular base configuration, in which case, the modules (31') entrance-exit modules (35') and base have a curved configuration.
